# DEMANDE DE BREVET EUROPEEN

(11) **EP 2 980 039 A1**
(43) Date de publication de la demande: **03.02.2016**
(21) Numéro de dépôt: 15178496.4
(22) Date de dépôt: 27.07.2015
(51) Int. Cl.: C04B 33/32, F27B 9/00, F27B 9/30

(54) **PROCÉDÉ DE CUISSON DE PRODUITS CÉRAMIQUES DANS UN FOUR TUNNEL EN CONTINU**

(30) Priorité: 28.07.2014 FR 1457284
(71) Demandeur: Ceritherm, 87150 Oradour-Sur-Vayres (FR)
(72) Inventeur: ZAMPARO, Giovanni, 87150 ORADOUR-SUR-VAYRES (FR)
(74) Mandataire: Laget, Jean-Loup

(57) **Abrégé**

Procédé de cuisson de produits céramiques dans un four tunnel en continu (1), comportant une entrée (3) des produits céramiques (2) avant cuisson, une sortie (4) des produits céramiques après cuisson, et une zone de feu (8) dans laquelle des brûleurs (9) alimentés en gaz (10) et en air extérieur assurent la cuisson des produits céramiques (2), un flux d'air parcourant le four de la sortie à l'entrée, à contre-courant des produits céramiques. L'air extérieur alimentant les brûleurs (9) est au moins partiellement remplacé par de l'air extrait du four (1) dans la zone de feu.

## Description

L'invention concerne un procédé de cuisson de produits céramiques dans un four tunnel en continu, et le four tunnel en continu adapté pour la mise en oeuvre du procédé de cuisson.

Un four tunnel en continu se compose essentiellement d'un tunnel dans lequel les produits céramiques sont déplacés entre une entrée et une sortie relativement éloignées l'une de l'autre, à contre-courant d'un flux d'air circulant de la sortie vers l'entrée. Dans la région centrale du tunnel est prévue une zone intermédiaire ou zone de feu dans laquelle sont disposés les brûleurs assurant la cuisson des produits céramiques. Ces brûleurs sont alimentés en gaz combustibles et en air extérieur.

Généralement, les produits céramiques sont disposés en charges en forme géométrique simple de parallélépipède rectangle.

Ces charges sont disposées en rangées occupant pratiquement toute la largeur du four tunnel. Ces rangées sont espacées les unes des autres, dans le sens longitudinal du four tunnel, et séparées par des fentes de chauffe. Elles sont soumises à une progression pas-à-pas.

Dans le four tunnel, les brûleurs sont disposés en groupes appelés centrales, et répartis sur toute la largeur du four tunnel.

Ainsi, une centrale de brûleurs peut comporter de quatre à plus de vingt brûleurs répartis sur la largeur du four tunnel. Tous les brûleurs d'une centrale de brûleurs ont généralement la même consigne de température, la même distribution d'air de combustion, et la même pression de gaz combustible, ce qui a pour conséquence une limitation des systèmes de contrôle et de régulation.

Les brûleurs de chaque centrale de brûleurs sont par exemple disposés en regard d'une fente de chauffe entre deux rangées de charges de produits céramiques. Dans la zone de feu, dans l'axe longitudinal du four tunnel, les centrales de brûleurs sont espacées par exemple d'un pas de progression des rangées de charges de produits céramiques.

De cette façon, les gaz de combustion issus des brûleurs se développent dans les fentes de chauffe sur toute la hauteur des charges et sur la largeur du four.

Dans les fours tunnels connus, des brûleurs ou des tuyères sont alimentés en combustibles gazeux et en air extérieur, les gaz de combustion éjectés dans l'enceinte de cuisson assurant deux fonctions : un apport énergétique permettant d'atteindre une température élevée pour la cuisson des produits céramiques, et un brassage turbulent autour des produits céramiques pour assurer une cuisson homogène des produits céramiques. L'air extérieur étant à température ambiante, il est possible, pour réduire la consommation énergétique des fours, de prélever de l'air chaud issu de zones de refroidissement du four, éloignées de la zone de feu, pour l'alimentation des brûleurs, ce qui entraîne des investissements en matériel. En effet, il faut faire circuler cet air chaud sur une distance longue dans des gaines isolées, et le distribuer dans la zone de feu à toutes les centrales de brûleurs. Par ailleurs, pour assurer la fonction de brassage, il est nécessaire d'augmenter la pression et le débit des gaz de combustion, c'est-à-dire la quantité d'air extérieur et de combustible gazeux, ce qui a pour conséquence une augmentation de la consommation thermique.

Le document DE 35 40 764 décrit un four tunnel dans lequel les brûleurs de la zone de feu sont alimentés en gaz combustible et en air frais.

Les brûleurs additionnels placés entre la zone de feu et la zone de refroidissement ne sont alimentés qu'en gaz combustible. Ils utilisent l'air disponible dans le four tunnel, qui vient de la zone de refroidissement et qui est aspiré vers la zone de feu. Cet air n'est pas à la température de la zone de feu. Il n'est pas extrait de la zone de feu pour alimenter un brûleur de la zone de feu.

Le document EP 0 863 115 décrit un four tunnel dans lequel les brûleurs sont alimentés en gaz et en air extérieur. Il sont équipés d'un distributeur destiné à favoriser l'entraînement de l'air du four par effet venturi.

Le document DE 1 913 446 décrit un four tunnel dans lequel une partie des gaz de combustion de la zone de feu est dirigée dans une zone d'équilibrage, dans le sens de déplacement des produits cuits, jusqu'à une ouverture de soutirage placée entre la zone d'équilibrage et la zone de refroidissement. L'air de refroidissement des produits et une partie des gaz de combustion sont aspirés dans le circuit primaire d'un échangeur air/air et réintroduits dans le four par des tubulures. L'air extérieur, réchauffé dans le circuit secondaire de l'échangeur alimente les brûleurs.

Aucun des documents connus ne décrit des brûleurs alimentés par de l'air en provenance directe de la zone de feu du four tunnel.

Un but de l'invention est de proposer un four tunnel en continu, pour la cuisson de produits céramiques, ne présentant pas les inconvénients précités.

Un autre but de l'invention est de proposer un procédé de cuisson de produits céramiques dans un four tunnel en continu, assurant une simplification des étapes nécessaires à l'alimentation des brûleurs, et l'économie correspondante.

L'invention a pour objet un procédé de cuisson de produits céramiques dans un four tunnel en continu, comportant une entrée des produits céramiques avant cuisson, une sortie des produits céramiques après cuisson, et une zone de feu dans laquelle des brûleurs alimentés en gaz et en air extérieur assurent la cuisson des produits céramiques, un flux d'air parcourant le four de la sortie à l'entrée, à contre-courant des produits céramiques, caractérisé en ce que l'air extérieur alimentant les brûleurs est au moins partiellement remplacé par de l'air extrait du four dans la zone de feu.

Avantageusement, les brûleurs étant groupés en centrales de brûleurs, l'air est extrait du four tunnel, pour chaque centrale, dans la zone d'action de ladite centrale.

De manière avantageuse, l'air est extrait du four tunnel, pour chaque centrale de brûleurs, à proximité immédiate de ladite centrale.

L'invention a aussi pour objet un four tunnel en continu pour la cuisson de produits céramiques, comportant une entrée des produits céramiques avant cuisson, une sortie des produits céramiques après cuisson, et une zone de feu dans laquelle des brûleurs groupés en centrales de brûleurs et alimentés en gaz et en air extérieur assurent la cuisson des produits céramiques, un flux d'air parcourant le four de la sortie à l'entrée, à contre-courant des produits céramiques, caractérisé en ce qu'il comporte des moyens pour prélever de l'air chaud dans la zone de feu pour alimenter au moins partiellement les brûleurs.

De manière avantageuse, les moyens pour prélever de l'air chaud dans la zone de feu sont constitués par une canalisation reliant la zone de feu à l'installation d'alimentation en air extérieur des brûleurs d'une centrale de brûleurs.

Avantageusement, la canalisation débouche dans la zone de feu à proximité immédiate de la centrale de brûleurs. D'autres caractéristiques et avantages de l'invention ressortent de la description qui suit faite avec référence aux dessins annexés dans lesquels :

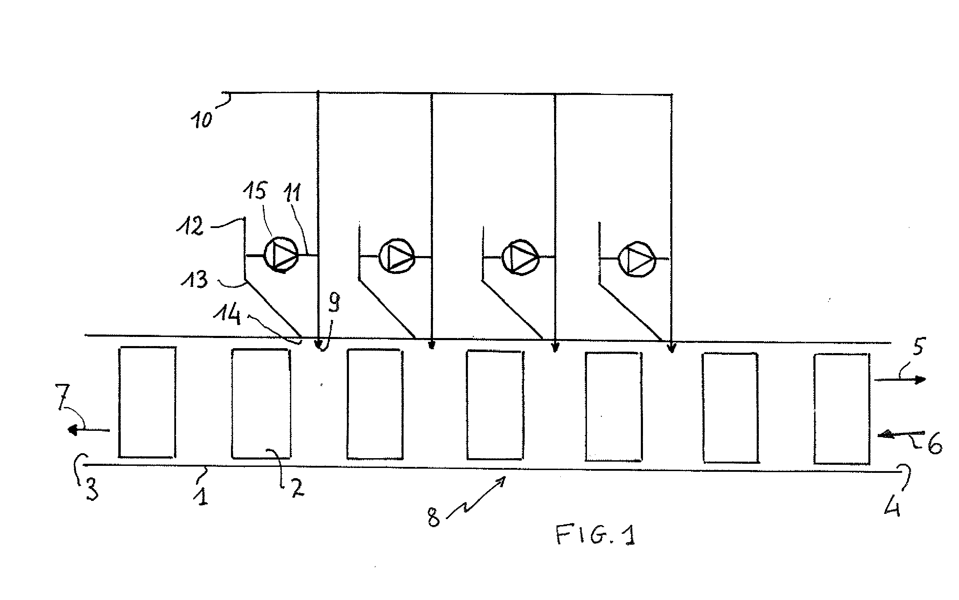

La figure 1 représente schématiquement un four tunnel en continu selon un mode de réalisation de l'invention.
Le four tunnel en continu 1 assure la cuisson de produits céramiques 2, qui sont acheminés depuis l'entrée 3 jusqu'à la sortie 4 dans le sens de la flèche 5. A contre-courant des produits céramiques 2, un flux d'air circule dans le four tunnel 1 en entrant par la sortie 4 (flèche 6) et en sortant par l'entrée 3 (flèche 7). Dans la région centrale du four tunnel 1 est située une zone intermédiaire 8, dite zone de feu à haute température. Dans cette zone de feu débouchent les brûleurs 9 alimentés d'une part en gaz combustibles 10, d'autre part en gaz comburants 11.

Selon l'invention, de l'air chaud présent dans le four tunnel 1, dans la zone de feu 8, est prélevé au moyen d'une canalisation 13 débouchant en 14 dans le four tunnel 1.

Cette canalisation 13 alimente une installation d'alimentation en air extérieur des brûleurs 9, par exemple une turbine 15 qui reçoit par ailleurs de l'air extérieur par la canalisation 12.

Dans le four tunnel 1, les produits céramiques 2 sont introduits à l'entrée 3 à la température ambiante. Ils sont réchauffés, par le flux d'air sortant en 7, jusqu'à la zone de feu 8.

Ils sont alors cuits à haute température par les gaz de combustion sortant des brûleurs 9.

Entre la zone de feu 8 et la sortie 4, les produits céramiques 2 sont refroidis par le flux d'air entrant en 6.

Inversement, le flux d'air entrant en 6 à la température ambiante se réchauffe jusqu'à la zone de feu 8 et se refroidit ensuite jusqu'à sa sortie en 7.

Le flux d'air circulant dans le four tunnel 1 à contre-courant des produits céramiques 2 a une teneur en oxygène proche de celle de l'atmosphère à température ambiante, et une température, dans la zone de feu 8 égale à la température de cuisson des produits céramiques, c'est-à-dire de l'ordre de 1.000° C. Cet air chaud est prélevé en 14, dans la zone de feu 8, pour être utilisé comme gaz comburant pour les brûleurs. A cet effet, il est transmis par la canalisation 13 à un appareil élévateur de pression tel qu'une turbine 15, de type hélico-centrifuge ou multi-étagée, ou un ventilateur centrifuge, par exemple. La turbine 15 reçoit aussi de l'air extérieur par la canalisation 12.

Ainsi, l'air chaud extrait du four tunnel remplace partiellement ou totalement l'air extérieur pour l'alimentation des brûleurs. En cas de remplacement partiel, la température du mélange d'air extérieur et d'air chaud extrait du four tunnel est réglable, par exemple autour de 500° C.

L'utilisation de l'air chaud du four tunnel, en remplacement au moins partiel de l'air extérieur, pour l'alimentation des brûleurs assure une économie de consommation de gaz combustible, aussi bien pour atteindre la température de cuisson, que pour assurer la fonction de brassage autour des produits céramiques dans la zone de feu.

L'air chaud prélevé dans la zone de feu est prélevé dans la zone d'action de chaque centrale de brûleurs, à proximité immédiate de chaque centrale, et individuellement pour chaque centrale afin de réduire autant que possible la longueur de la canalisation 13.

Dans un mode de réalisation du four tunnel, les brûleurs d'une centrale de brûleurs sont répartis en ligne sur toute la largeur du four, en regard d'une fente de chauffe. Selon un autre mode de réalisation, une centrale de brûleurs correspond par exemple à deux fentes de chauffe et deux lignes de brûleurs. Selon un autre mode de réalisation, les brûleurs d'une centrale de brûleurs sont répartis autour de la charge à cuire.

## Revendications

1. Procédé de cuisson de produits céramiques dans un four tunnel en continu (1), comportant une entrée (3) des produits céramiques (2) avant cuisson, une sortie (4) des produits céramiques (2) après cuisson, et une zone de feu (8) dans laquelle des brûleurs (9) alimentés en gaz (10) et en air assurent la cuisson des produits céramiques (2), un flux d'air parcourant le four de la sortie à l'entrée, à contre-courant des produits céramiques, **caractérisé en ce que** l'air extérieur alimentant les brûleurs (9) est au moins partiellement remplacé par de l'air extrait du four (1) dans la zone de feu (8).

2. Procédé selon la revendication 1, **caractérisé en ce que** les brûleurs (9) étant groupés en centrales de brûleurs, l'air est extrait du four tunnel, pour chaque centrale, dans la zone d'action de ladite centrale.

3. Procédé selon la revendication 2, **caractérisé en ce que** l'air est extrait du four tunnel, pour chaque centrale de brûleurs, à proximité immédiate de ladite centrale.

4. Four tunnel en continu pour la cuisson de produits céramiques, comportant une entrée (3) des produits céramiques (2) avant cuisson, une sortie (4) des produits céramiques (2) après cuisson, et une zone de feu (8) dans laquelle des brûleurs (9) groupés en centrales de brûleurs et alimentés en gaz (10) et en air extérieur assurent la cuisson des produits céramiques, un flux d'air parcourant le four de la sortie à l'entrée, à contre-courant des produits céramiques, **caractérisé en ce qu'**il comporte des moyens pour prélever de l'air chaud dans la zone de feu (1) pour alimenter au moins partiellement les brûleurs(9).

5. Four tunnel en continu selon la revendication 4, **caractérisé en ce que** les moyens pour prélever de l'air chaud dans la zone de feu sont constitués par une canalisation (13) reliant la zone de feu à l'installation d'alimentation en air extérieur des brûleurs (9) d'une centrale de brûleurs.

6. Four tunnel en continu selon la revendication 5, **caractérisé en ce que** la canalisation (13) débouche dans la zone de feu à proximité immédiate de la centrale de brûleurs.
